# EUROPEAN PATENT SPECIFICATION

(11) **EP 3 800 359 B1**
(45) Date of publication and mention of the grant of the patent: **03.04.2024**
(21) Application number: 20198908.4
(22) Date of filing: 29.09.2020
(51) Int. Cl.: F15B 19/00

(54) **ABNORMALITY DETECTING SYSTEM AND ABNORMALITY DETECTING METHOD**
SYSTEM ZUR DETEKTION VON ANOMALIEN UND VERFAHREN ZUR DETEKTION VON ANOMALIEN
SYSTÈME ET PROCÉDÉ DE DÉTECTION D'ANOMALIE

(30) Priority: 03.10.2019 JP 2019182668
(43) Date of publication of application: 07.04.2021
(73) Proprietor: SMC Corporation, Tokyo 101-0021 (JP)
(72) Inventor: AKI, Tomohiko, Ibaraki, 300-2493 (JP); OZAKI, Norimasa, Ibaraki, 300-2493 (JP)
(74) Representative: Keil & Schaafhausen Patentanwälte PartGmbB

(56) References cited:
- JP-A- 2004 011 722
- US-A1- 2018 292 025
- US-B2- 9 891 135

## Description

### BACKGROUND OF THE INVENTION

### Field of the Invention:

The present invention relates to an abnormality detecting system and an abnormality detecting method for detecting an abnormality of an actuator based on a travel time of a movable portion that is displaced between one end and another end of the actuator.

### Description of the Related Art:

Conventionally, with an actuator having a movable portion traveling between one end and another end thereof, whether the actuator has an abnormality including a fault etc. is detected based on the leakage of working fluid (pressurized fluid) supplied to the one end or another end of the actuator, the lowest pressure (lowest working pressure) for operation of the movable portion, the takt time for the actuator, and so on.

Among these factors, the leakage of the pressurized fluid is examined, for example based on the results of detection obtained by a flow sensor that detects the flow rate of the pressurized fluid. However, with this inspection method, the results of detection obtained by the flow sensor varies depending on conditions of the tubes that supply the pressurized fluid, the pressure value of the pressurized fluid being used, the pulsation of the pressurized fluid, and temperature condition. It is therefore difficult to set such conditions.

In addition, the lowest working pressure is examined, for example based on the results of detection obtained by a pressure sensor that detects the pressure of the pressurized fluid. However, this inspection method requires checking the lowest working pressure with the actuator being at rest. Further, the travel rate of the movable portion varies depending on the bore size of the actuator's cylinder and the stroke of the movable portion. It is difficult to set these conditions also in this case.

Accordingly, Japanese Patent No. 6011875 discloses a technique in which an abnormality detecting device provided on the actuator side performs a process of detecting an abnormality of the takt time of the actuator using statistical data stored in the device, and the detected result is outputted to outside.

Document US 2018/0292025 A1 discloses a modular control device for solenoid valve islands, particularly for the activation of actuators, having a control module for controlling a solenoid valve adapted for activating an actuator, a communication module adapted to exchange information signals with such an actuator and an electrical connection module adapted to receive control signals from a user. The electrical connection module transmits the control signals to the control module and receives the information signals from the communication module. The electrical connection module has a processing and control unit configured to receive, store and process the information signals and the control signals.

### SUMMARY OF THE INVENTION

However, in the technique of the prior art above, performing the abnormality detecting process requires determining settings like a threshold of the initial value of the takt time etc. according to individual devices and conditions under which they are used.

The present invention has been devised considering these problems, and an object of the present invention is to provide an abnormality detecting system and an abnormality detecting method that can detect an abnormality such as a fault etc. of at least the actuator easily, at low cost, accurately, and speedily.

According to the present invention there are provided an abnormality detecting system according to claim 1 and an abnormality detecting method according to claim 8 for detecting an abnormality of an actuator based on a travel time of a movable portion that is displaced between one end and another end of the actuator.

According to the present invention, the stroke of the movable portion is entered as input from outside and an abnormality of the actuator is detected on the basis of the input stroke, the results of sensing obtained by the first sensor and the second sensor, and the number of operations of the movable portion. Accordingly, it is possible to detect an abnormality of the actuator more easily, at lower cost, more accurately, and more speedily, as compared to the technique of the patent publication cited above which detects an abnormality of the actuator using statistical data stored in the device.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is a configuration diagram illustrating an abnormality detecting system according to an embodiment;
FIG. 2 is an internal configuration diagram of the abnormality detecting device of FIG. 1;
FIG. 3 is a flowchart of a process (abnormality detecting method) performed by the abnormality detecting system of FIG. 1; and
FIG. 4 is a flowchart of the process (abnormality detecting method) performed by the abnormality detecting system of FIG. 1.

### DESCRIPTION OF THE PREFERRED EMBODIMENTS

The abnormality detecting system and abnormality detecting method according to the present invention will be described while referring to the drawings in connection with illustrative preferred embodiments.

### [1. Configuration of Embodiment]

### <1.1. Overall Configuration of Abnormality Detecting System 10>

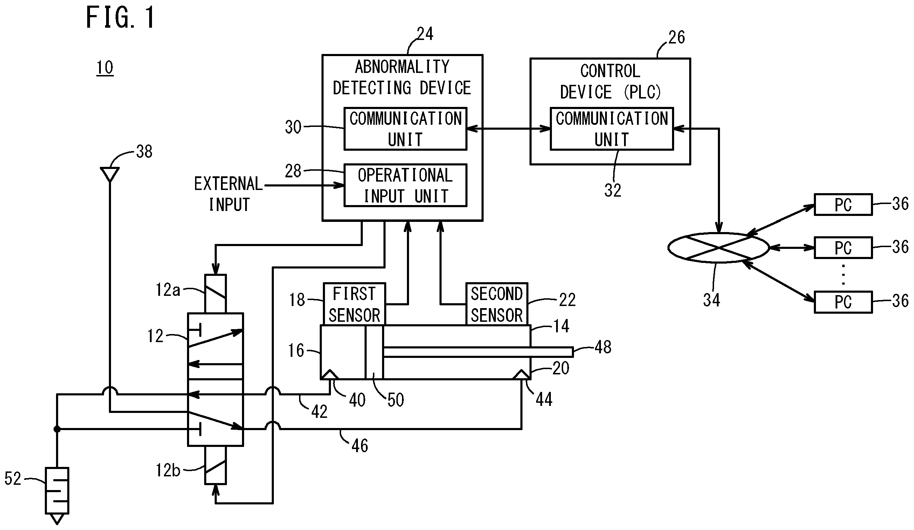

As shown in FIG. 1, an abnormality detecting system 10 of this embodiment includes a directional control valve 12 being a 4-direction 5-port double-acting solenoid valve, an actuator 14 such as a fluid pressure cylinder etc., a first sensor 18 (first sensor) disposed at one end 16 of the actuator 14, a second sensor 22 (second sensor) disposed at another end 20 of the actuator 14, an abnormality detecting device 24, and a control device 26 (another device) such as a PLC (Programmable Logic Controller) etc.

The abnormality detecting system 10 is a system that is incorporated in equipment not shown, and it has an abnormality detecting function of automatically detecting, without stopping the equipment, abnormalities, such as degradation, faults, etc., of the actuator 14 while the equipment is in operation, . In this embodiment, "one end 16" of the actuator 14 indicates the left-hand (head-side) end of the fluid pressure cylinder in FIG. 1, and "another end 20" indicates the righthand (rod-side) end of the fluid pressure cylinder.

The abnormality detecting device 24 is situated in the vicinity of the actuator 14 of the equipment and includes an operation and input unit 28 (external input unit) that allows entry of various information from outside, and a communication unit 30. The operation and input unit 28 is an operational device such as a keyboard, numeric keypad, touchscreen panel, etc., which allows a person in charge of the equipment to enter various information. The control device 26 is a host device of the abnormality detecting device 24, and is provided at a location remote from the abnormality detecting device 24 and the actuator 14. The control device 26 includes a communication unit 32. The communication unit 30 of the abnormality detecting device 24 and the communication unit 32 of the control device 26 are serially connected through fieldbus etc. The two communication units 30 and 32 thus send and receive various signals or information by serial communication. The communication unit 32 of the control device 26 can be connected via a network 34 to a plurality of PCs 36 (another device, external device) serving as host devices provided at remote locations.

The control device 26 supplies a control signal (control command) to solenoids 12a, 12b of the directional control valve 12 through the communication unit 32. The directional control valve 12 is responsive to the control signal supplied to the solenoids 12a, 12b to output a pressurized fluid, which is supplied from a fluid pressure source 38, selectively to the one end 16 or another end 20 of the actuator 14. That is, when the solenoid 12a is supplied with the control signal, the directional control valve 12 comes in the state illustrated by the upper one of the two blocks shown in FIG. 1. When the solenoid 12b is supplied with the control signal, the directional control valve 12 comes in the state illustrated by the lower block. A first tube 42 (first tube) is connected between the directional control valve 12 and a port 40 provided on the one end 16 side of the actuator 14, and a second tube 46 (second tube) is connected between the directional control valve 12 and a port 44 provided on another end 20 side of the actuator 14.

The actuator 14 is a fluid pressure cylinder in which a piston 50 (movable portion) coupled to a piston rod 48 is displaced along the left-right directions in FIG. 1 (displacement directions, stroke directions) on the basis of the supply of pressurized fluid from the directional control valve 12. The piston rod 48 extends from the piston 50 to the right in FIG. 1 and passes through another end 20 of the actuator 14 and projects out.

Now, when the solenoid 12a is excited by the supply of control signal to the solenoid 12a and the directional control valve 12 comes in the state of the upper block, then the pressurized fluid is supplied from the fluid pressure source 38 to the one end 16 through the directional control valve 12, the first tube 42, and the port 40, and the pressurized fluid in another end 20 is discharged outside from another end 20 through the port 44, the second tube 46, and the directional control valve 12. This causes the piston 50 and the piston rod 48 to move together to the right in FIG. 1 from the one end 16 to another end 20 of the actuator 14.

On the other hand, when the solenoid 12b is excited by the supply of control signal to the solenoid 12b and the directional control valve 12 comes in the state of the lower block, then the pressurized fluid is supplied from the fluid pressure source 38 to another end 20 through the directional control valve 12, the second tube 46, and the port 44, and the pressurized fluid in the one end 16 is discharged outside from the one end 16 through the port 40, the first tube 42, and the directional control valve 12. This causes the piston 50 and the piston rod 48 to move together to the left in FIG. 1 from another end 20 to the one end 16.

In this way, the control signal is supplied alternately from the control device 26 to the solenoids 12a, 12b through the communication unit 30, whereby the piston 50 and the piston rod 48 reciprocate between the one end 16 and another end 20 along the left-right directions of FIG. 1. Accordingly, in the embodiment, "stroke" means the distance the piston 50 travels from the one end 16 to another end 20 of the actuator 14 or from another end 20 to the one end 16 thereof. A silencer 52 is provided at the end of the discharge passage of the pressurized fluid flowing from the one end 16 or another end 20.

The first sensor 18 is provided on the one end 16 side of the actuator 14, and the second sensor 22 is provided on another end 20 side thereof. The first sensor 18 and the second sensor 22 are limit switches or magnetic switches that sense the piston 50 when the piston 50 has moved to positions facing the first sensor 18 and the second sensor 22, and output the results of sensing in the form of sense signals to the abnormality detecting device 24. When the piston 50 has moved away and the first sensor 18 and second sensor 22 do not face the piston 50 anymore, the first sensor 18 and the second sensor 22 stop outputting the sense signals.

Based on the results of sensing obtained by the first sensor 18 and the second sensor 22 and information inputted from outside through the operation and input unit 28, the abnormality detecting device 24 detects whether the actuator 14, the directional control valve 12, and the first tube 42 or the second tube 46 has any abnormality. The abnormality detecting device 24 sends information, e.g., the result of detection indicating presence of an abnormality, from the communication unit 30 to the communication unit 32 of the control device 26 through serial communication. The abnormality detecting device 24 can thus continuously perform the abnormality detecting processing for the actuator 14 etc. while the equipment is in operation.

### <1.2. Internal Configuration of Abnormality Detecting Device 24>

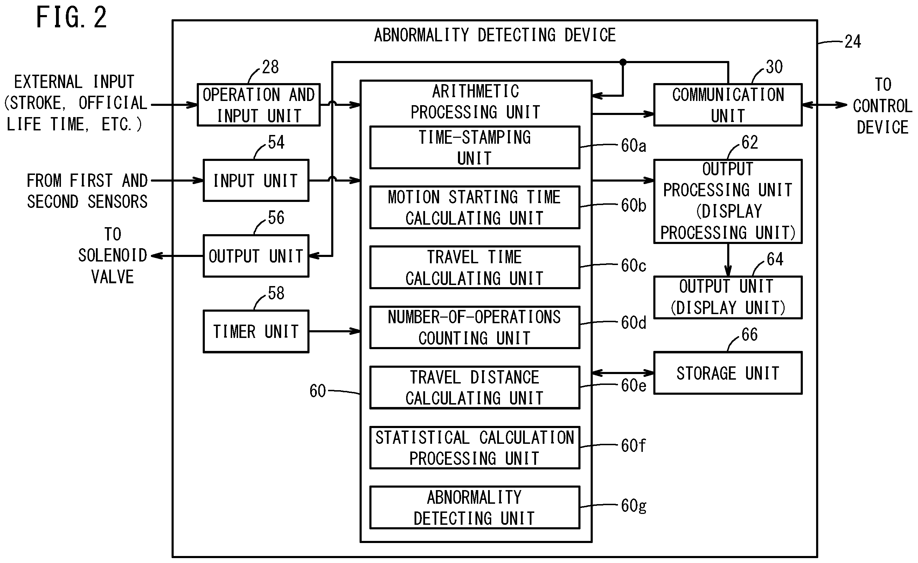

As shown in FIG. 2, the abnormality detecting device 24 includes the operation and input unit 28, an input unit 54, an output unit 56, a timer unit 58, an arithmetic processing unit 60, the communication unit 30, an output processing unit 62, an output unit 64, and a storage unit 66. The arithmetic processing unit 60 is a processor like a microcomputer etc. that executes a program stored in the storage unit 66 and performs the functions of a time-stamping unit 60a, a motion starting time calculating unit 60b, (motion starting time detecting unit), a travel time calculating unit 60c, a number-of-operations counting unit 60d, a travel distance calculating unit 60e, a statistical calculation processing unit 60f, and an abnormality detecting unit 60g.

A person in charge of the equipment operates the operation and input unit 28 and enters into the operation and input unit 28 the stroke of the piston 50, a time threshold of a travel time of the piston 50, an upper limit of the number of operations of the piston 50 (number-of-operations upper limit), a distance threshold of a total travel distance of the piston 50, an upper limit of a motion starting time of the piston 50 (time upper limit).

The travel time of the piston 50 means a time that the piston 50 requires to move from the one end 16 to another end 20 or from another end 20 to the one end 16. The time threshold is the upper limit value of an allowable range of the travel time of the piston 50.

The number of operations of the piston 50 means the number of reciprocations of the piston 50 between the one end 16 and another end 20 of the actuator 14, or the number of times that the piston 50 has moved from the one end 16 to another end 20 and from another end 20 to the one end 16 (twice the number of reciprocations). The number-of-operations upper limit means the upper limit value of an allowable range of the number of operations of the piston 50. The number-of-operations upper limit can be suitably changed according to the type (model) of the fluid pressure cylinder and the type (model) or the sealing method of the directional control valve 12.

The total travel distance of the piston 50 is the total distance the piston 50 has moved, is commensurate with the number of operations of the piston 50, and is the product of the number of operations and the stroke (the number of operations times the stroke equals the total travel distance). The distance threshold is the upper limit value of an allowable range of the total travel distance.

The motion starting time means a period of time measured, in one operation of the piston 50, from when the supply of the control signal to the solenoid 12a, 12b is started to when one of the first sensor 18 and the second sensor 22 becomes unable to sense the piston 50. The time upper limit is the upper limit value for an allowable range of the motion starting time.

The thresholds and upper limits explained above are values that depend on the official lifetime or guaranteed lifetime of the actuator 14, the directional control valve 12, the first tube 42, and second tube 46, etc. that is recommended by the manufacturer that produces the abnormality detecting system 10.

The input unit 54 detects a rising edge of the sense signal from the first sensor 18 or the second sensor 22 when the sense signal is inputted (when the level of the sense signal changes from a low level to a high level), and outputs the detected result (result of sensing) to the arithmetic processing unit 60. The input unit 54 also detects a falling edge of the sense signal when the input of the sense signal from the first sensor 18 or the second sensor 22 stops (when the level of the sense signal changes from the high level to the low level), and outputs the detected result (result of sensing) to the arithmetic processing unit 60.

The output unit 56 outputs the control signal, supplied from the control device 26 through the communication unit 30, to the solenoids 12a, 12b of the directional control valve 12. The timer unit 58 is a timer having a time counting function.

The time-stamping unit 60a of the arithmetic processing unit 60 performs time-stamping processing to provide time information concerning the present time to at least the results of sensing obtained by the first sensor 18 and the second sensor 22 when the results of sensing are inputted from the input unit 54.

The motion starting time calculating unit 60b calculates (detects), in each single operation of the piston 50, the motion starting time which is a period of time from when the supply of control signal to the solenoid 12a, 12b of the directional control valve 12 started to when one of the first and second sensors 18 and 22 becomes unable to sense the piston 50.

The travel time calculating unit 60c calculates the travel time of the piston 50 based on the results of sensing provided from the first sensor 18 and the second sensor 22. In this case, as the travel time, the travel time calculating unit 60c calculates, in a single operation of the piston 50, a period of time from when the supply of control signal starts to when the other of the first and second sensors 18 and 22 senses the piston 50.

The number-of-operations counting unit 60d counts the number of operations (actions) of the piston 50 based on the results of sensing provided from the first sensor 18 and the second sensor 22. In this case, in one operation of the piston 50, when a rising edge and a falling edge are inputted from the input unit 54 to the arithmetic processing unit 60, the number-of-operations counting unit 60d counts one (one operation of the piston 50).

The travel distance calculating unit 60e calculates the total travel distance of the piston 50 by multiplying the number of operations and the stroke of the piston 50 together.

The statistical calculation processing unit 60f performs statistical calculation processing to calculate statistical values such as mean values, variances and standard deviations, etc., for the motion starting time, travel time, number of operations, total travel distance, etc. In this case, the statistical calculation processing may be conducted, for example, using the statistical calculation processing method described in the patent publication cited earlier.

The abnormality detecting unit 60g detects presence/absence of an abnormality of the actuator 14, the directional control valve 12, and the first tube 42 or second tube 46, based on the motion starting time, travel time, number of operations or total travel distance, and the results of the statistical calculation processing, etc. A method for detecting presence/absence of an abnormality will be described later.

The storage unit 66 stores the results of various arithmetic processing from the arithmetic processing unit 60 and the results of sensing from the first sensor 18 and the second sensor 22 that have been timestamped by the time-stamping processing. The storage unit 66 thus stores the results of sensing and the results of arithmetic processing in association with the time information.

The output processing unit 62 performs processing corresponding to the output form of the output unit 64 when outputting through the output unit 64 the results of various arithmetic processing provided from the arithmetic processing unit 60 and the results of sensing provided from the first and second sensors 18 and 22 that have been timestamped. For example, if the output unit 64 is a display unit like a display device, the output processing unit 62 performs processing for displaying the results of sensing and the results of arithmetic processing on the display.

The communication unit 30 outputs the control signal supplied from the communication unit 32 of the control device 26 to the output unit 56 and the arithmetic processing unit 60. The communication unit 30 also sends to the communication unit 32 of the control device 26 the results of various arithmetic processing by the arithmetic processing unit 60 and the results of sensing by the first and second sensors 18 and 22 that have been timestamped.

### [2. Operations of Embodiment]

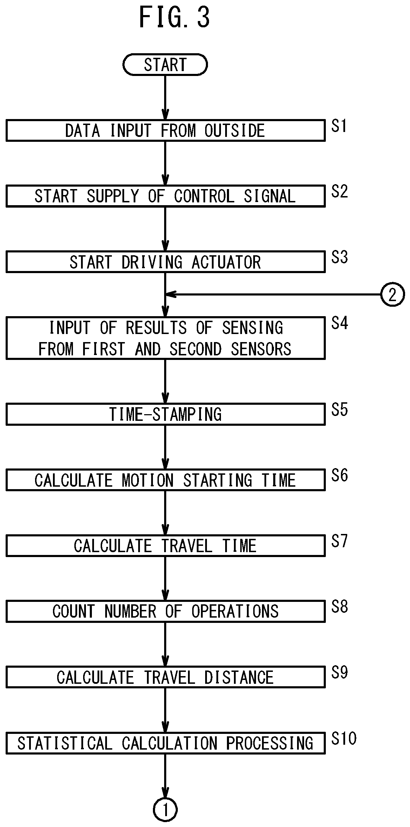

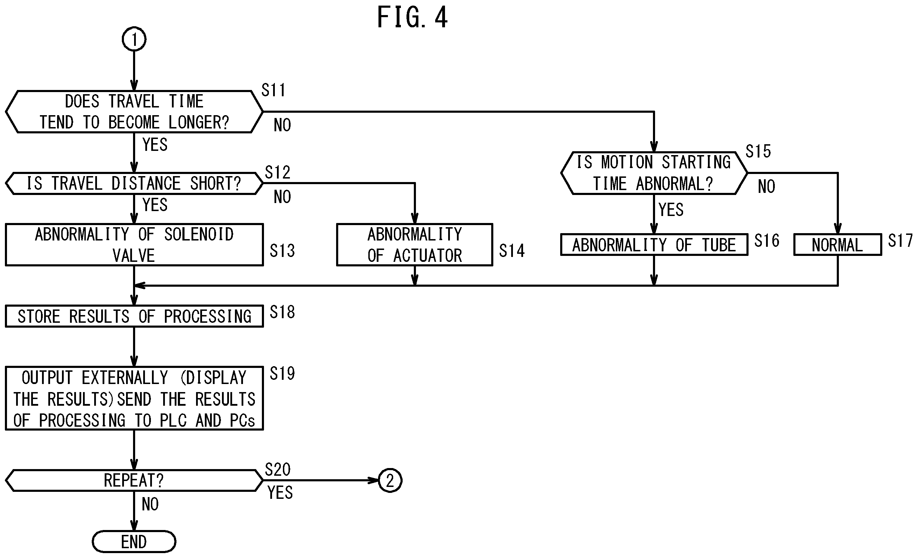

Operations of the abnormality detecting system 10 (abnormality detecting method) of the embodiment constructed as described above will be explained referring to the flowchart of FIGS. 3 and 4. Here a case is explained where the supply of control signal from the control device 26 (see FIG. 1) to the solenoid 12a is started, whereby the actuator 14 is activated, and the piston 50 first moves from the one end 16 to another end 20 of the actuator 14. The control device 26 supplies the control signal alternately to the two solenoids 12a, 12b.

First, at step S1 (first step) of FIG. 3, a person in charge of the equipment operates the operation and input unit 28 (see FIGS. 1 and 2) to input the stroke of the piston 50, the time threshold, the number-of-operations upper limit, the distance threshold, and the time upper limit. The inputted settings are stored in the storage unit 66.

At step S2, the control device 26 starts the supply of control signal to the communication unit 30 of the abnormality detecting device 24 through the communication unit 32. The communication unit 30 of the abnormality detecting device 24 outputs the supplied control signal to the output unit 56 and the arithmetic processing unit 60. This allows the arithmetic processing unit 60 to recognize that the supply of control signal has started. The output unit 56 supplies the control signal to the solenoid 12a of the directional control valve 12.

At step S3, as the supply of control signal to the solenoid 12a excites the solenoid 12a, the pressurized fluid is supplied from the fluid pressure source 38 to the one end 16 of the actuator 14 through the directional control valve 12, the first tube 42, and the port 40, and the pressurized fluid in another end 20 is discharged outside from another end 20 through the port 44, the second tube 46, and the directional control valve 12. As a result, the piston 50 and piston rod 48 move from the one end 16 to another end 20 of the actuator 14.

Then, due to the displacement of the piston 50 to another end 20, the first sensor 18 becomes unable to sense the piston 50 at the next step S4 (second step). On the other hand, the second sensor 22 can sense the piston 50 after the piston 50 has moved to another end 20. The results of sensing obtained by the first sensor 18 and the second sensor 22 are inputted to the input unit 54. The input unit 54 detects the falling edge of the sense signal from the first sensor 18 and outputs the result of detection (result of sensing) to the arithmetic processing unit 60. The input unit 54 also detects the rising edge of the sense signal from the second sensor 22 and outputs the result of detection (result of sensing) to the arithmetic processing unit 60.

At step S5, the time-stamping unit 60a of the arithmetic processing unit 60 executes time-stamping processing that provides present time information to the results of sensing provided from the first sensor 18 and the second sensor 22, i.e., to the rising edge and the falling edge. The time-stamping unit 60a stores into the storage unit 66 the results of sensing from the first sensor 18 and the second sensor 22 (information on the rising edge and the falling edge) that are associated with the time information.

At step S6, the motion starting time calculating unit 60b calculates the motion starting time, a period of time from when the supply of control signal to the solenoid 12a starts to when the first sensor 18 becomes unable to sense the piston 50, and stores the calculated motion starting time into the storage unit 66.

At step S7 (third step), based on the motion starting time and the rising edge, the travel time calculating unit 60c calculates the travel time, a period of time from when the supply of control signal to the solenoid 12a starts to when the second sensor 22 senses the piston 50, and stores the calculated travel time into the storage unit 66.

At step S8, based on the falling edge and the rising edge, the number-of-operations counting unit 60d counts one action of the piston 50, and stores the counted number of actions into the storage unit 66.

At step S9 (fourth step), the travel distance calculating unit 60e multiplies together the number of operations counted by the number-of-operations counting unit 60d and the stroke stored in the storage unit 66, to thereby calculate the total travel distance of the piston 50, and stores the calculated total travel distance into the storage unit 66.

At step S10, the statistical calculation processing unit 60f calculates statistical values, such as mean values, variances, and standard deviations, etc., for the motion starting time, travel time, number of operations, and total travel distance.

In this way, through the operations at steps S5 to S10, the storage unit 66 has stored the results of sensing obtained by the first sensor 18 and the second sensor 22, the motion starting time, the travel time, the number of operations, the total travel distance, and the statistical values, in association with the time information.

Then, at steps S11 to S17 of FIG. 4 (fifth step), the abnormality detecting unit 60g (see FIG. 2) detects whether the actuator 14 (see FIG. 1), the directional control valve 12, and the first tube 42 or second tube 46 has abnormalities, based on the calculated results and the settings previously set in the storage unit 66.

That is, at step S11, the abnormality detecting unit 60g determines whether the travel time of the piston 50 tends to become longer, i.e., whether or not the travel time is equal to or longer than the time threshold.

If the travel time is equal to or longer than the time threshold (step S11: YES), then at the next step S12, the abnormality detecting unit 60g determines whether the total travel distance of the piston 50 is shorter, i.e., whether the number of operations is less than the number-of-operations upper limit, or whether the total travel distance is less than the distance threshold.

If the number of operations is less than the number-of-operations upper limit, or if the total travel distance is less than the distance threshold (step S12: YES), then, since both steps S11 and S12 have shown affirmative results, the abnormality detecting unit 60g determines at the next step S13 that the directional control valve 12 is suffering an abnormality such as a fault.

If the number of operations is equal to or larger than the number-of-operations upper limit and the total travel distance is equal to or longer than the distance threshold (step S12: NO), then at step S14, the abnormality detecting unit 60g determines that the actuator 14 is suffering an abnormality such as a fault.

On the other hand, at step S11, if the travel time is less than the time threshold (step S11: NO), the abnormality detecting unit 60g determines at step S15 whether the motion starting time of the piston 50 is abnormal, i.e., whether or not the motion starting time is equal to or longer than the time upper limit.

If the motion starting time is equal to or longer than the time upper limit (step S15: YES), then the abnormality detecting unit 60g determines at step S16 that the first tube 42 or second tube 46 is suffering an abnormality such as a fault.

If the motion starting time is less than the time upper limit (step S15: NO), then the abnormality detecting unit 60g determines at step S17 that the actuator 14, the directional control valve 12, and the first tube 42 or second tube 46 has no abnormality like a fault, i.e., they are normal.

As a result, at step S18, the abnormality detecting unit 60g stores into the storage unit 66 the results of determination concerning the presence/absence of abnormality that have been made at any of steps S13, S14, S16, and S17.

At step S19, the output processing unit 62 performs processing corresponding to the output form of the output unit 64, with the time information, the results of sensing obtained by the first sensor 18 and the second sensor 22, the results of operational processing obtained by the arithmetic processing unit 60, and the results of determination made by the abnormality detecting unit 60g that have been stored in the storage unit 66. Thus, the output unit 64 can outwardly report the results processed by the output processing unit 62. For example, if the output unit 64 is a display unit, the screen of the display unit displays the time information, the results of sensing by the first sensor 18 and the second sensor 22, the results of operational processing by the arithmetic processing unit 60, the results of determination by the abnormality detecting unit 60g, and the like. Further, the communication unit 30 sends the time information and the respective results to the communication unit 32 of the control device 26 through serial communication. The communication unit 32 of the control device 26 sends the received information further to the PCs 36 at remote locations through the network 34.

At step S20, the arithmetic processing unit 60 determines whether to repeat steps S4 to S19. As described above, the control device 26 supplies the control signal alternately to the solenoids 12a, 12b. Hence, if step S20 provides an affirmative determination, the process returns to step S4 to repeat steps S4 to S19, thereby performing the abnormality detecting process for detecting abnormalities that could occur when the piston 50 moves from another end 20 to the one end 16.

In this way, by repeatedly performing steps S4 to S19, the embodiment can detect presence/absence of abnormality of the actuator 14, the directional control valve 12, and the first tube 42 or second tube 46, even while the piston 50 is reciprocating along the displacement directions (while the actuator 14 is being driven).

If some abnormality has been detected according to the results of determination made at steps S13, S14, S16 and so the actuator 14 is made to stop moving in order to deal with the abnormality (step S20: NO), then the supply of control signal from the control device 26 is stopped. The supply of control signal from the control device 26 is stopped also when the actuator 14 is made to stop moving due to some reason like regular maintenance work etc. (step S20: NO).

### [3. Modifications]

The description above has illustrated an example in which the operation and input unit 28 and the output unit 64 are contained in the abnormality detecting device 24. In an embodiment, the operation and input unit 28 and the output unit 64 may be provided as external units outside of the abnormality detecting device 24.

The description above has illustrated an example in which the control device 26 and the PCs 36 are connected through the network 34. In an embodiment, the control device 26 and the PCs 36 may be connected in any manner as long as they can be communicably connected to each other.

Further, the description above has illustrated an example in which the various information stored in the storage unit 66 is sent from the communication unit 30 to the control device 26 and the PCs 36. In an embodiment, since the various information is stored in the storage unit 66 in association with the time information, the various information may be stored in a portable storage unit 66 (storage device) such as a USB memory etc. so as to allow the control device 26 or the PCs 36 to acquire the various information at some later time by removing the storage device from the abnormality detecting device 24 and connecting it to the control device 26 or the PCs 36.

### [4. Effects of Embodiments]

As described above, the abnormality detecting system 10 and the abnormality detecting method according to the embodiment detects an abnormality of the actuator 14 based on the travel time of the piston 50 (movable portion) that is displaced between one end 16 and another end 20 of the actuator 14.

The abnormality detecting system 10 includes: the first sensor 18 (first sensor) that senses the piston 50 that has been displaced to the one end 16; the second sensor 22 (second sensor) that senses the piston 50 that has been displaced to another end 20; the operation and input unit 28 (external input unit) that inputs the stroke of the piston 50; the travel time calculating unit 60c that calculates the travel time based on the results of sensing obtained by the first sensor 18 and the second sensor 22; the travel distance calculating unit 60e that calculates a total travel distance of the piston 50 based on the number of operations and the stroke of the piston 50; and the abnormality detecting unit 60g that detects an abnormality of at least the actuator 14 based on the travel time and either the number of operations or the total travel distance.

The abnormality detecting method includes: the step S1 (first step) of inputting the stroke of the piston 50 by means of the operation and input unit 28; the step S4 (second step) of sensing by means of the first sensor 18 the piston 50 that has been displaced to the one end 16, and sensing by means of the second sensor 22 the piston 50 that has been displaced to another end 20; the step S7 (third step) of calculating, by means of the travel time calculating unit 60c, the travel time based on the results of sensing obtained by the first sensor 18 and the second sensor 22; the step S9 (fourth step) of calculating, by means of the travel distance calculating unit 60e, a total travel distance of the piston 50 based on the number of operations and the stroke of the piston 50; and the steps S11 to S17 (fifth step) of detecting, by means of the abnormality detecting unit 60g, an abnormality of at least the actuator 14 based on the travel time and either the number of operations or the total travel distance.

Thus, the stroke of the piston 50 is entered as input from outside and an abnormality of the actuator 14 is detected on the basis of the input stroke, the results of sensing obtained by the first sensor 18 and the second sensor 22, and the number of operations of the piston 50. Accordingly, it is possible to detect an abnormality of the actuator 14 more easily, at lower cost, more accurately, and more speedily, as compared to the technique of the patent publication cited earlier, which detects an abnormality of the actuator using statistical data stored in the device.

Furthermore, because the abnormality detecting system 10 can detect an abnormality of at least the actuator 14 simply and accurately, it is possible to improve maintainability of the equipment when maintenance work is performed regularly (according to a plan).

Moreover, because the abnormality detecting system 10 receives the stroke of the piston 50 entered through the operation and input unit 28, it is also possible to set the stroke taking account of a factor of safety up to replacement of the actuator 14.

The abnormality detecting system 10 further includes the directional control valve 12 that supplies a pressurized fluid selectively to the one end 16 or another end 20 based on a control signal supplied from outside. The piston 50 is displaced between the one end 16 and another end 20 by the selective supply of the pressurized fluid to the one 16 end or another end 20. The operation and input unit 28 inputs the stroke, a time threshold of the travel time, and a number-of-operations upper limit of the number of operations or a distance threshold of the total travel distance. The travel distance calculating unit 60e is configured to calculate the total travel distance by multiplying the number of operations and the stroke together.

Then, the abnormality detecting unit 60g detects an abnormality of the directional control valve 12 if the travel time is equal to or longer than the time threshold, and the number of operations is less than the number-of-operations upper limit or the total travel distance is less than the distance threshold. Further, the abnormality detecting unit 60g detects an abnormality of the actuator 14 if the travel time is equal to or longer than the time threshold and the number of operations is equal to or larger than the number-of-operations upper limit or the total travel distance is equal to or longer than the distance threshold.

Thus, the abnormality detecting system 10 can easily and accurately narrow down the cause of the abnormality such as a fault based on the two parameters of the travel time and the total travel distance, making it possible to detect the abnormality efficiently.

The abnormality detecting system 10 further includes: the first tube 42 (first tube) that supplies the pressurized fluid from the directional control valve 12 to the one end 16; the second tube 46 (second tube) that supplies the pressurized fluid from the directional control valve 12 to another end 20; and the motion starting time calculating unit 60b (motion starting time detecting unit) that detects, for each single operation of the piston 50, a motion starting time of the piston 50 that is the time from when the supply of the control signal to the directional control valve 12 is started to when one of the first sensor 18 and the second sensor 22 becomes unable to sense the piston 50.

In this case, the operation and input unit 28 inputs a time upper limit of the motion starting time, and the abnormality detecting unit 60g detects an abnormality of the first tube 42 or the second tube 46 if the motion starting time is equal to or longer than the time upper limit.

It is thus possible to easily and efficiently detect an abnormality of the first tube 42 or the second tube 46. Further, it is possible to specify which of the actuator 14, the directional control valve 12, and the first tube 42 or second tube 46 is the cause of the abnormality, and therefore appropriate and quick measures can be taken for the device causing the abnormality.

The abnormality detecting system 10 further includes the abnormality detecting device 24 including the operation and input unit 28, the travel time calculating unit 60c, the travel distance calculating unit 60e, the abnormality detecting unit 60g, and the time-stamping unit 60a configured to provide present time information to at least the results of sensing obtained by the first sensor 18 and the second sensor 22 when the results of sensing are inputted.

Utilizing the concept of time-stamping makes it possible to manage the presence/absence of an abnormality even at a location remote from the actuator 14.

In this case, the abnormality detecting device 24 further includes the communication unit 30 configured to perform communications with the control device 26 (another device). The communication unit 30 sends to the control device 26 the results of sensing provided with the time information and the result of detection obtained by the abnormality detecting unit 60g.

It is thus possible to easily manage the presence/absence of an abnormality at the control device 26 located at a place remote from the actuator 14. Further, the control device 26 can give instructions to the abnormality detecting device 24 so that the abnormality can suitably be dealt with.

The another device includes the control device 26 that performs serial communication with the communication unit 30 and the PCs 36 (external device) that are connected to the control device 26 through the network 34. In this case, the control device 26 supplies the control signal to the directional control valve 12 through the communication unit 30 by the serial communication, and the control device 26 receives the time information, the results of sensing, and the result of detection from the communication unit 30 and sends the time information, the results of sensing, and the result of detection further to the PCs 36 through the network 34.

It is thus possible also in this case to easily manage the presence/absence of an abnormality at the PCs 36 at remote locations. Further, if a PC 36 centrally supervises a plurality of actuators 14 and abnormality detecting devices 24, the PC 36 can give appropriate instructions about an abnormality individually to the abnormality detecting device 24 that has detected the abnormality.

The abnormality detecting device 24 further includes the output unit 64 configured to outwardly output at least the result of detection obtained by the abnormality detecting unit 60g. This allows a person in charge of the equipment etc. to be informed of the presence/absence of an abnormality.

In this case, if the output unit 64 is a display unit that displays the result of detection, the screen of the display unit displays the presence/absence of an abnormality so that the person in charge etc. can be informed more easily.

## Claims

1. An abnormality detecting system (10) configured to detect an abnormality of an actuator (14) based on a travel time of a movable portion (50) that is displaced between one end (16) and another end (20) of the actuator (14), the system comprising:
the actuator (14);
a first sensor (18) that is configured to sense the movable portion (50) when it has been displaced to the one end (16) ;
a second sensor (22) that is configured to sense the movable portion (50) when it has been displaced to the another end (20) ;
an external input unit (28) that is configured to input a stroke of the movable portion (50);
a travel time calculating unit (60c) that is configured to calculate the travel time based on results of sensing obtained by the first sensor (18) and the second sensor (22);
a travel distance calculating unit (60e) that is configured to calculate a total travel distance of the movable portion (50) based on number of operations of the movable portion (50) and the stroke;
an abnormality detecting unit (60g) that is configured to detect an abnormality of at least the actuator (14) based on the travel time and either the number of operations or the total travel distance;
and
a directional control valve (12) that is configured to supply a pressurized fluid selectively to the one end (16) or the another end (20) based on a control signal for displacing the movable portion between the one end (16) and the another end (20) by the selective supply of the pressurized fluid to the one end (16) or the another end (20);
wherein
the travel distance calculating unit (60e) is configured to calculate the total travel distance by multiplying the number of operations and the stroke together;
**characterized in that**
the external input unit (28) being configured to input a time threshold of the travel time, and either a number-of-operations upper limit for the number of operations or a distance threshold of the total travel distance, and
the abnormality detecting unit (60g) is configured to detect an abnormality of the directional control valve (12) when the travel time is equal to or longer than the time threshold, and either when the number of operations is less than the number-of-operations upper limit or when the total travel distance is less than the distance threshold, and
detect an abnormality of the actuator (14) when the travel time is equal to or longer than the time threshold and the number of operations is equal to or larger than the number-of-operations upper limit and when the total travel distance is equal to or longer than the distance threshold.

2. The abnormality detecting system according to claim 1, further comprising:
a first tube (42) that is configured to supply the pressurized fluid from the directional control valve (12) to the one end (16);
a second tube (46) that is configured to supply the pressurized fluid from the directional control valve (12) to the another end (20); and
a motion starting time detecting unit (60b) that is configured to detect, for each single operation of the movable portion (50), a motion starting time of the movable portion (50) that is a time from when supply of the control signal to the directional control valve (12) is started to when one of the first sensor (18) and the second sensor (22) becomes unable to sense the movable portion (50),
wherein the external input unit (28) is configured to input a time upper limit for the motion starting time, and
the abnormality detecting unit (60g) is configured to detect an abnormality of the first tube (42) or the second tube (46) when the motion starting time is equal to or longer than the time upper limit.

3. The abnormality detecting system according to claim 1, further comprising an abnormality detecting device (24) that includes
the external input unit (28),
the travel time calculating unit (60c),
the travel distance calculating unit (60e),
the abnormality detecting unit (60g), and
a time-stamping unit (60a) that is configured to provide time information that is a present time to at least the results of sensing obtained by the first sensor (18) and the second sensor (22) when the results of sensing are inputted.

4. The abnormality detecting system according to claim 3, wherein the abnormality detecting device (24) further comprises a communication unit (30) that is configured to perform communication with another device (26, 36), and
the communication unit (30) sends to the another device the results of sensing provided with the time information and a result of detection obtained by the abnormality detecting unit (60g).

5. The abnormality detecting system according to claim 4, wherein the another device comprises
a control device that is configured to perform serial communication with the communication unit (30) and
an external device that is connected to the control device through a network (34), and
the control device is configured to supply the control signal to the directional control valve (12) through the communication unit (30) by the serial communication, and the control device is configured to receive the time information, the results of sensing, and the result of detection from the communication unit (30) and to send the time information, the results of sensing, and the result of detection to the external device through the network.

6. The abnormality detecting system according to any one of claims 3 to 5, wherein the abnormality detecting device (24) further includes an output unit (64) that is configured to outwardly output at least a result of detection obtained by the abnormality detecting unit (60g).

7. The abnormality detecting system according to claim 6, wherein the output unit (64) is a display unit that is configured to display the result of detection.

8. An abnormality detecting method for detecting an abnormality of an actuator (14) based on a travel time of a movable portion (50) that is displaced between one end (16) and another end (20) of the actuator (14), the method comprising:
a first step of inputting a stroke of the movable portion (50) by means of an external input unit (28);
a second step of sensing by means of a first sensor (18) the movable portion (50) that has been displaced to the one end (16), and sensing by means of a second sensor (22) the movable portion (50) that has been displaced to the another end (20) ;
a third step of calculating, by means of a travel time calculating unit (60c), the travel time based on results of sensing obtained by the first sensor (18) and the second sensor (22);
a fourth step of calculating, by means of a travel distance calculating unit (60e), a total travel distance of the movable portion (50) based on a number of operations and the stroke of the movable portion (50);
a fifth step of detecting, by means of an abnormality detecting unit (60g), an abnormality of at least the actuator (14) based on the travel time and either the number of operations or the total travel distance;
wherein a directional control valve (12) supplies a pressurized fluid selectively to the one end (16) or the another end (20) based on a control signal for displacing the movable portion between the one end (16) and the another end (20) by the selective supply of the pressurized fluid to the one end (16) or the another end (20);
and wherein in the fourth step, the travel distance calculating unit (60e) is configured to calculate the total travel distance by multiplying the number of operations and the stroke together;
**characterized in that** in the first step, the external input unit (28) inputs a time threshold of the travel time, and either a number-of-operations upper limit for the number of operations or a distance threshold of the total travel distance, and
in the fifth step, the abnormality detecting unit (60g) is configured to
detect an abnormality of the directional control valve (12) when the travel time is equal to or longer than the time threshold, and either when the number of operations is less than the number-of-operations upper limit or when the total travel distance is less than the distance threshold, and
detect an abnormality of the actuator (14) when the travel time is equal to or longer than the time threshold and the number of operations is equal to or larger than the number-of-operations upper limit and when the total travel distance is equal to or longer than the distance threshold.

## Patentansprüche

1. System (10) zum Erkennen von Abnormalitäten, das so konfiguriert ist, dass es eine Abnormalität eines Aktuators (14) auf der Grundlage einer Verfahrzeit eines beweglichen Abschnitts (50) erkennt, der zwischen einem Ende (16) und einem anderen Ende (20) des Aktuators (14) verschoben wird, wobei das System Folgendes umfasst:
das Stellglied (14);
einen ersten Sensor (18), der so konfiguriert ist, dass er den beweglichen Abschnitt (50) erfasst, wenn er zu dem einen Ende (16) verschoben worden ist;
einen zweiten Sensor (22), der so konfiguriert ist, dass er den beweglichen Abschnitt (50) erfasst, wenn er zum anderen Ende (20) verschoben wurde;
eine externe Eingabeeinheit (28), die so konfiguriert ist, dass sie einen Hub des beweglichen Abschnitts (50) eingibt;
eine Fahrzeitberechnungseinheit (60c), die so konfiguriert ist, dass sie die Fahrzeit auf der Grundlage von Erfassungsergebnissen berechnet, die von dem ersten Sensor (18) und dem zweiten Sensor (22) erhalten werden;
eine Fahrstreckenberechnungseinheit (60e), die so konfiguriert ist, dass sie eine Gesamtfahrstrecke des beweglichen Abschnitts (50) auf der Grundlage der Anzahl von Betätigungen des beweglichen Abschnitts (50) und des Hubs berechnet;
eine Abnormalitätserfassungseinheit (60g), die so konfiguriert ist, dass sie eine Abnormalität zumindest des Stellglieds (14) auf der Grundlage der Fahrzeit und entweder der Anzahl von Betätigungen oder der Gesamtfahrstrecke erfasst; und
ein Richtungssteuerventil (12), das so konfiguriert ist, dass es ein unter Druck stehendes Fluid selektiv zu dem einen Ende (16) oder dem anderen Ende (20) auf der Grundlage eines Steuersignals zuführt, um den beweglichen Abschnitt zwischen dem einen Ende (16) und dem anderen Ende (20) durch die selektive Zufuhr des unter Druck stehenden Fluids zu dem einen Ende (16) oder dem anderen Ende (20) zu verschieben;
wobei die Fahrstreckenberechnungseinheit (60e) so konfiguriert ist, dass sie die Gesamtfahrstrecke durch Multiplizieren der Anzahl von Betätigungen und des Hubs miteinander berechnet,
**dadurch gekennzeichnet, dass**
die externe Eingabeeinheit (28) so konfiguriert ist, dass sie einen Zeitschwellenwert für die Verfahrzeit und entweder eine Obergrenze für die Anzahl der Betätigungen oder einen Entfernungsschwellenwert für die Gesamtverfahrstrecke eingibt, und
die Abnormalitätserfassungseinheit (60g) so konfiguriert ist, dass sie
eine Abnormalität des Wegeventils (12) erfasst, wenn die Verfahrzeit gleich oder länger als der Zeitschwellenwert ist, und entweder wenn die Anzahl der Betätigungen kleiner als die obere Grenze der Anzahl der Betätigungen ist oder wenn die Gesamtverfahrstrecke kleiner als der Abstandsschwellenwert ist, und
eine Abnormalität des Aktuators (14) erfasst, wenn die Fahrzeit gleich oder länger als der Zeitschwellenwert ist und die Anzahl der Betätigungen gleich oder größer als der obere Grenzwert für die Anzahl der Betätigungen ist und wenn die gesamte Fahrstrecke gleich oder länger als der Entfernungsschwellenwert ist.

2. System zum Erkennen von Abnormalitäten nach Anspruch 1, ferner umfassend:
ein erstes Rohr (42), das so konfiguriert ist, dass es das unter Druck stehende Fluid von dem Wegeventil (12) zu dem einen Ende (16) führt;
ein zweites Rohr (46), das so konfiguriert ist, dass es das unter Druck stehende Fluid von dem Wegeventil (12) zu dem anderen Ende (20) führt; und
eine Bewegungsstartzeit-Erfassungseinheit (60b), die so konfiguriert ist, dass sie für jede einzelne Betätigung des beweglichen Abschnitts (50) eine Bewegungsstartzeit des beweglichen Abschnitts (50) erfasst, die eine Zeit von dem Zeitpunkt, zu dem die Zufuhr des Steuersignals zu dem Wegeventil (12) gestartet wird, bis zu dem Zeitpunkt ist, zu dem einer von dem ersten Sensor (18) und dem zweiten Sensor (22) nicht mehr in der Lage ist, den beweglichen Abschnitt (50) zu erfassen,
wobei die externe Eingabeeinheit (28) dazu konfiguriert ist, um eine zeitliche Obergrenze für die Bewegungsstartzeit einzugeben, und
die Abnormalitätserfassungseinheit (60g) so konfiguriert ist, dass sie eine Abnormalität der ersten Röhre (42) oder der zweiten Röhre (46) erfasst, wenn die Bewegungsstartzeit gleich der oder länger als die obere Zeitgrenze ist.

3. System zum Erkennen von Abnormalitäten nach Anspruch 1, das ferner eine Abnormalitätserkennungsvorrichtung (24) umfasst, die Folgendes enthält
die externe Eingabeeinheit (28),
die Fahrzeitberechnungseinheit (60c),
die Wegstreckenberechnungseinheit (60e),
die Einheit zur Erkennung von Abnormalitäten (60g), und
eine Zeitstempelungseinheit (60a), die so konfiguriert ist, dass sie eine Zeitinformation bereitstellt, die eine gegenwärtige Zeit für zumindest die Ergebnisse der Abtastung ist, die durch den ersten Sensor (18) und den zweiten Sensor (22) erhalten werden, wenn die Ergebnisse der Abtastung eingegeben werden.

4. System zum Erkennen von Abnormalitäten nach Anspruch 3, wobei die Abnormalitätserfassungsvorrichtung (24) ferner eine Kommunikationseinheit (30) umfasst, die konfiguriert ist, um eine Kommunikation mit einer anderen Vorrichtung (26, 36) durchzuführen, und
die Kommunikationseinheit (30) die mit der Zeitinformation versehenen Erfassungsergebnisse und ein von der Abnormalitätserfassungseinheit (60g) erhaltenes Erfassungsergebnis an die andere Vorrichtung sendet.

5. System zum Erkennen von Abnormalitäten nach Anspruch 4, wobei die andere Vorrichtung Folgendes umfasst
eine Steuervorrichtung, die konfiguriert ist, um eine serielle Kommunikation mit der Kommunikationseinheit (30) durchzuführen, und
eine externe Vorrichtung, die mit der Steuervorrichtung über ein Netzwerk (34) verbunden ist, und
die Steuervorrichtung so konfiguriert ist, dass sie das Steuersignal über die Kommunikationseinheit (30) durch die serielle Kommunikation an das Wegeventil (12) liefert, und die Steuervorrichtung so konfiguriert ist, dass sie die Zeitinformationen, die Ergebnisse der Abtastung und das Ergebnis der Erfassung von der Kommunikationseinheit (30) empfängt und die Zeitinformationen, die Ergebnisse der Abtastung und das Ergebnis der Erfassung über das Netzwerk an die externe Vorrichtung sendet.

6. System zum Erkennen von Abnormalitäten nach einem der Ansprüche 3 bis 5, wobei die Abnormalitätserkennungsvorrichtung (24) ferner eine Ausgabeeinheit (64) enthält, die so konfiguriert ist, dass sie mindestens ein von der Abnormalitätserkennungseinheit (60g) erhaltenes Erkennungsergebnis nach außen ausgibt.

7. System zum Erkennen von Abnormalitäten nach Anspruch 6, wobei die Ausgabeeinheit (64) eine Anzeigeeinheit ist, die so konfiguriert ist, dass sie das Ergebnis der Erkennung anzeigt.

8. Verfahren zum Erfassen einer Abnormalität eines Aktuators (14) auf der Grundlage einer Verfahrzeit eines beweglichen Abschnitts (50), der zwischen einem Ende (16) und einem anderen Ende (20) des Aktuators (14) verschoben wird, wobei das Verfahren umfasst:
einen ersten Schritt des Eingebens eines Hubs des beweglichen Abschnitts (50) mittels einer externen Eingabeeinheit (28);
einen zweiten Schritt des Erfassens des beweglichen Teils (50), der zu dem einen Ende (16) verschoben wurde, mittels eines ersten Sensors (18) und des Erfassens des beweglichen Teils (50), der zu dem anderen Ende (20) verschoben wurde, mittels eines zweiten Sensors (22)
einen dritten Schritt des Berechnens, mittels einer Fahrzeitberechnungseinheit (60c), der Fahrzeit auf der Grundlage der durch den ersten Sensor (18) und den zweiten Sensor (22) erhaltenen Erfassungsergebnisse;
einen vierten Schritt des Berechnens einer Gesamtbewegungsstrecke des beweglichen Abschnitts (50) auf der Grundlage einer Anzahl von Betätigungen und des Hubs des beweglichen Abschnitts (50) mittels einer Bewegungsstreckenberechnungseinheit (60e); und
einen fünften Schritt des Erfassens, mittels einer Abnormalitätserfassungseinheit (60g), einer Abnormalität von zumindest dem Aktuator (14) auf der Grundlage der Fahrzeit und entweder der Anzahl von Betätigungen oder der Gesamtfahrstrecke;
wobei ein Richtungssteuerventil (12) ein unter Druck stehendes Fluid selektiv dem einen Ende (16) oder dem anderen Ende (20) auf der Grundlage eines Steuersignals zuführt, um den beweglichen Abschnitt zwischen dem einen Ende (16) und dem anderen Ende (20) durch die selektive Zufuhr des unter Druck stehenden Fluids zu dem einen Ende (16) oder dem anderen Ende (20) zu verschieben; und
wobei im vierten Schritt die Wegstreckenberechnungseinheit (60e) so konfiguriert ist, dass sie die Gesamtwegstrecke berechnet, indem sie die Anzahl der Vorgänge und den Hub miteinander multipliziert, und
**dadurch gekennzeichnet, dass**
im ersten Schritt die externe Eingabeeinheit (28) einen Zeitschwellenwert für die Verfahrzeit und entweder einen oberen Grenzwert für die Anzahl der Betätigungen oder einen Entfernungsschwellenwert für die Gesamtverfahrstrecke eingibt,
im fünften Schritt ist die Abnormalitätserfassungseinheit (60g) so konfiguriert, dass sie
eine Abnormalität des Wegeventils (12) detektiert, wenn die Verfahrzeit gleich oder länger als der Zeitschwellenwert ist, und entweder wenn die Anzahl der Betätigungen kleiner als die obere Grenze der Anzahl der Betätigungen ist oder wenn die Gesamtverfahrstrecke kleiner als der Entfernungsschwellenwert ist, und
eine Abnormalität des Stellglieds (14) detektiert, wenn die Verfahrzeit gleich oder länger als der Zeitschwellenwert ist und die Anzahl der Betätigungen gleich oder größer als die obere Grenze der Anzahl der Betätigungen ist und wenn die Gesamtverfahrstrecke gleich oder länger als der Entfernungsschwellenwert ist.

## Revendications

1. Système de détection d'anomalie (10) configuré pour détecter une anomalie d'un actionneur (14) sur la base d'un temps de déplacement d'une partie mobile (50) déplacée entre une extrémité (16) et une autre extrémité (20) de l'actionneur (14), le système comprenant :
l'actionneur (14) ;
un premier capteur (18) configuré pour détecter la partie mobile (50) lorsque celle-ci a été déplacée vers ladite extrémité (16) ;
un deuxième capteur (22) configuré pour détecter la partie mobile (50) lorsque celle-ci a été déplacée vers l'autre extrémité (20) ;
une unité d'entrée externe (28) configurée pour entrer une course de la partie mobile (50) ;
une unité de calcul de temps de déplacement (60c) configurée pour calculer le temps de déplacement sur la base de résultats de détection obtenus par le premier capteur (18) et le deuxième capteur (22) ;
une unité de calcul de distance de déplacement (60e) configurée pour calculer une distance de déplacement totale de la partie mobile (50) sur la base du nombre d'opérations de la partie mobile (50) et de la course ;
une unité de détection d'anomalie (60g) configurée pour détecter une anomalie au moins de l'actionneur (14) sur la base du temps de déplacement et soit du nombre d'opérations, soit de la distance de déplacement totale ;
et
une soupape de commande directionnelle (12) configurée pour alimenter un fluide sous pression sélectivement vers ladite extrémité (16) ou vers l'autre extrémité (20) sur la base d'un signal de commande afin de déplacer la partie mobile entre ladite extrémité (16) et l'autre extrémité (20) par l'alimentation sélective du fluide sous pression vers ladite extrémité (16) ou l'autre extrémité (20) ;
dans lequel
l'unité de calcul de distance de déplacement (60e) est configurée pour calculer la distance de déplacement totale en multipliant le nombre d'opérations par la course ;
**caractérisé en ce que**
l'unité d'entrée externe (28) est configurée pour entrer un seuil de temps du temps de déplacement, et soit une limite supérieure de nombre d'opérations pour le nombre d'opérations, soit un seuil de distance de la distance de déplacement totale,
et
l'unité de détection d'anomalie (60g) est configurée pour
détecter une anomalie de la soupape de commande directionnelle (12) lorsque le temps de déplacement est égal ou supérieur au seuil de temps, et soit lorsque le nombre d'opérations est inférieur à la limite supérieure de nombre d'opérations, soit lorsque la distance de déplacement totale est inférieure au seuil de distance, et
détecter une anomalie de l'actionneur (14) lorsque le temps de déplacement est égal ou supérieur au seuil de temps et que le nombre d'opérations est égal ou supérieur à la limite supérieure de nombre d'opérations et lorsque la distance de déplacement totale est égale ou supérieure au seuil de distance.

2. Système de détection d'anomalie selon la revendication 1, comprenant en outre :
un premier tube (42) configuré pour alimenter le fluide sous pression à partir de la soupape de commande directionnelle (12) vers ladite extrémité (16) ;
un deuxième tube (46) configuré pour alimenter le fluide sous pression à partir de la soupape de commande directionnelle (12) vers l'autre extrémité (20) ; et
une unité de détection de temps de début de déplacement (60b) configurée pour détecter, pour chaque opération individuelle de la partie mobile (50), un temps de début de déplacement de la partie mobile (50), lequel est un temps à partir de l'envoi du signal de commande à la soupape de commande directionnelle (12) jusqu'au moment où l'un parmi le premier capteur (18) et le deuxième capteur (22) ne peut plus détecter la partie mobile (50),
dans lequel l'unité d'entrée externe (28) est configurée pour entrer une limite supérieure de temps pour le temps de début de déplacement, et
l'unité de détection d'anomalie (60g) est configurée pour détecter une anomalie du premier tube (42) ou du deuxième tube (46) lorsque le temps de début de déplacement est égal ou supérieur à la limite supérieure de temps.

3. Système de détection d'anomalie selon la revendication 1, comprenant en outre un dispositif de détection d'anomalie (24) incluant
l'unité d'entrée externe (28),
l'unité de calcul de temps de déplacement (60c),
l'unité de calcul de distance de déplacement (60e),
l'unité de détection d'anomalie (60g), et
une unité d'horodatage (60a) configurée pour fournir des informations de temps correspondant à un temps actuel au moins jusqu'aux résultats de détection obtenus par le premier capteur (18) et le deuxième capteur (22) lorsque les résultats de détection sont entrés.

4. Système de détection d'anomalie selon la revendication 3,
dans lequel le dispositif de détection d'anomalie (24) comprend en outre une unité de communication (30) configurée pour établir une communication avec un autre dispositif (26, 36), et
l'unité de communication (30) envoie, à l'autre dispositif, les résultats de détection fournis avec les informations de temps et un résultat de détection obtenu par l'unité de détection d'anomalie (60g).

5. Système de détection d'anomalie selon la revendication 4, dans lequel l'autre dispositif comprend
un dispositif de commande configuré pour établir une communication sérielle avec l'unité de communication (30) et
un dispositif externe connecté au dispositif de commande par le biais d'un réseau (34), et
le dispositif de commande est configuré pour envoyer le signal de commande à la soupape de commande directionnelle (12) par le biais de l'unité de communication (30) par la communication sérielle, et le dispositif de commande est configuré pour recevoir les informations de temps, les résultats de détection et le résultat de détection en provenance de l'unité de communication (30) et pour envoyer les informations de temps, les résultats de détection et le résultat de détection au dispositif externe par le biais du réseau.

6. Système de détection d'anomalie selon l'une quelconque des revendications 3 à 5, dans lequel le dispositif de détection d'anomalie (24) inclut en outre une unité de sortie (64) configurée pour émettre vers l'extérieur au moins un résultat de détection obtenu par l'unité de détection d'anomalie (60g).

7. Système de détection d'anomalie selon la revendication 6, dans lequel l'unité de sortie (64) est une unité d'affichage configurée pour afficher le résultat de détection.

8. Procédé de détection d'anomalie pour la détection d'une anomalie d'un actionneur (14) sur la base d'un temps de déplacement d'une partie mobile (50) déplacée entre une extrémité (16) et une autre extrémité (20) de l'actionneur (14), le procédé comprenant :
une première étape d'entrée d'une course de la partie mobile (50) au moyen d'une unité d'entrée externe (28) ;
une deuxième étape de détection, au moyen d'un premier capteur (18), de la partie mobile (50) déplacée vers ladite extrémité (16), et de détection, au moyen d'un deuxième capteur (22), de la partie mobile (50) déplacée vers l'autre extrémité (20) ;
une troisième étape de calcul, au moyen d'une unité de calcul de temps de déplacement (60c), du temps de déplacement sur la base de résultats de détection obtenus par le premier capteur (18) et le deuxième capteur (22) ;
une quatrième étape de calcul, au moyen d'une unité de calcul de distance de déplacement (60e), d'une distance de déplacement totale de la partie mobile (50) sur la base d'un nombre d'opérations et de la course de la partie mobile (50) ;
une cinquième étape de détection, au moyen d'une unité de détection d'anomalie (60g), d'une anomalie au moins de l'actionneur (14) sur la base du temps de déplacement et soit du nombre d'opérations, soit de la distance de déplacement totale ;
dans lequel
une soupape de commande directionnelle (12) fournit un fluide sous pression sélectivement à ladite extrémité (16) ou à l'autre extrémité (20) sur la base d'un signal de commande pour le déplacement de la partie mobile entre ladite extrémité (16) et l'autre extrémité (20) par l'alimentation sélective du fluide sous pression vers ladite extrémité (16) et l'autre extrémité (20) ;
et dans lequel
dans la quatrième étape, l'unité de calcul de distance de déplacement (60e) est configurée pour calculer la distance de déplacement totale en multipliant le nombre d'opérations par la course ;
**caractérisé en ce que**
dans la première étape, l'unité d'entrée externe (28) entre une seuil de temps du temps de déplacement, et soit une limite supérieure de nombre d'opérations pour le nombre d'opérations, soit un seuil de distance de la distance de déplacement totale,
et
dans la cinquième étape, l'unité de détection d'anomalie (60g) est configurée pour
détecter une anomalie de la soupape de commande directionnelle (12) lorsque le temps de déplacement est égal ou supérieur au seuil de temps, et soit lorsque le nombre d'opérations est inférieur à la limite supérieure de nombre d'opérations, soit lorsque la distance de déplacement totale est inférieure au seuil de distance, et
détecter une anomalie de l'actionneur (14) lorsque le temps de déplacement est égal ou supérieur au seuil de temps et que le nombre d'opérations est égal ou supérieur à la limite supérieure de nombre d'opérations et lorsque la distance de déplacement totale est égale ou supérieure au seuil de distance.
